# EUROPÄISCHE PATENTSCHRIFT

(11) **EP 3 868 905 B1**
(45) Veröffentlichungstag und Bekanntmachung des Hinweises auf die Patenterteilung: **18.10.2023**
(21) Anmeldenummer: 21157499.1
(22) Anmeldetag: 16.02.2021
(51) Int. Cl.: C22B 1/00, C01F 11/18, C22B 7/04, C22B 26/20, C21B 3/04

(54) **VERFAHREN UND SYSTEM ZUR IMPLEMENTIERUNG EINES KALK-KOHLENDIOXID-KREISLAUFS BEI DER EISEN- UND STAHLPRODUKTION**
METHOD AND SYSTEM FOR IMPLEMENTING A LIMESTONE-CARBON DIOXIDE CYCLE IN IRON AND STEEL PRODUCTION
PROCÉDÉ ET SYSTÈME DE MISE EN OEUVRE D'UN CYCLE DE DIOXYDE DE CARBONE-LIME DANS LA PRODUCTION DE FER ET D'ACIER

(30) Priorität: 20.02.2020 DE 102020104490
(43) Veröffentlichungstag der Anmeldung: 25.08.2021
(73) Patentinhaber: TCG cleanliness GmbH, 66271 Kleinblittersdorf (DE)
(72) Erfinder: SCHULTZ, Daniel, 66271 Kleinblittersdorf (DE)
(74) Vertreter: MERH-IP Matias Erny Reichl Hoffmann Patentanwälte PartG mbB

(56) Entgegenhaltungen:
- EP-B1- 2 844 615
- WO-A1-97/11030
- DE-A1-102011 087 653
- JP-A- H1 057 969
- JP-A- S55 100 220
- US-A1- 2014 286 842
- Mattila Hannu-Petteri ET AL: "Production of Precipitated Calcium Carbonate from Steel Converter Slag and Other Calcium-Containing Industrial Wastes and Residues" In: "Advances in Inorganic Chemistry", 1. Januar 2014 (2014-01-01), Academic Press, US, XP055821541, ISSN: 0898-8838 Bd. 66, Seiten 347-384, DOI: 10.1016/B978-0-12-420221-4.00010-X, Gefunden im Internet: URL:http://dx.doi.org/10.1016/B978-0-12-42 0221-4.00010-X> * Seite 363, Zeile 375; Abbildungen 10.4,10.5 *

## Beschreibung

### TECHNISCHES FELD

Die Erfindung betrifft ein Verfahren und ein System zur Implementierung eines Kalk-Kohlendioxid-Kreislaufs bei der Eisen- und Stahlproduktion, welche es erlauben, unter Verwendung von bei der Eisen- und Stahlproduktion anfallender Schlacke das im Produktionsprozess gebildete Kohlendioxid aus dem Abgas durch Bildung von Calciumcarbonat zu entfernen und den so gebildeten Kalkstein wieder in den Eisen- und Stahlproduktionsprozess rückzuführen.

### TECHNISCHER HINTERGRUND

Hochofenprozesse haben ihren Hintergrund vor allem in der Eisen- und Stahlproduktion. Bei der Eisen- und Stahlproduktion wird dabei unter anderem auch Kalk verwendet, um Fremdstoffe im Roheisen und im Rohstahl zu binden und als Schlacke vom Roheisen und vom Stahl zu trennen. Außerdem werden bei der Produktion von Roheisen und Stahl große Mengen an Kohlendioxid freigesetzt, welche die Umwelt erheblich belasten. Im Rahmen des Klimaschutzplans 2050 hat sich die deutsche Bundesregierung zum Ziel gesetzt, in Deutschland bis 2050 weitgehend treibhausneutral zu werden. Außerdem ist es geplant, Kohlendioxidemissionen in Zukunft zu besteuern. Daraus würden erhebliche Mehrkosten für die Eisen- und Stahlproduktion resultieren.

Bis dato werden Schlacken aus der Eisen- und Stahlproduktion als reines Abfallprodukt angesehen und in die Zement- und Baustoffindustrie entsorgt. Weitergehende Beachtung solcher Schlacken findet kaum statt.

Zusätzlich beschreibt die Druckschrift JP S55 100220 A ein Verfahren zur Rückgewinnung von Calciumcarbonat aus Konverterschlacke.

Des Weiteren beschreibt die Druckschrift US 2014/286842 A1 ein Verfahren zur Mineralisierung von Calcium aus Industrieabfällen, welches das Extrahieren von Calciumionen aus einer Suspension von calciumreichen, granulösen Partikeln und wässrigem Ammoniumchlorid vorsieht, um eine erste Calcium-reiche Fraktion und eine schwere zweite Fraktion zu bilden. Die zweite schwere Fraktion wird von der ersten Fraktion getrennt, und die Calcium-reiche erste Fraktion wird mit einem Kohlendioxid-haltigen Gas karbonisiert, um eine Suspension aus präzipitiertem Calciumcarbonat und wässrigem Ammoniumchlorid zu bilden. Das Präzipitat wird durch Zentrifugieren von der wässrigen Ammoniumchloridlösung getrennt, und die getrennte schwere zweite Fraktion umfasst einen angereicherten Gewichtsanteil an Eisen.

Die Druckschrift WO 97/11030 A1 beschreibt überdies ein Verfahren zur Herstellung hochreinen Calciumcarbonats aus Kalkofenstaub enthaltenden Rauchgasen.

Die Druckschrift DE 10 2011 087653 A1 beschreibt eine Vorrichtung zum Verfestigen und Umwandeln von Kohlendioxid in Carbonat, wobei eine Alkalimetallkomponente aus Rohschlacke in einem Extraktionsreaktor extrahiert wird.

Und die Druckschrift JP H10 57969 A beschreibt ein Verfahren zur Abwasserbehandlung, in welchem Fluor durch Bildung von Calciumfluorid entfernt wird.

Aufgabe der Erfindung ist es daher, ein Verfahren und ein System bereitzustellen, welche es ermöglichen, die Umweltbelastung durch Kohlendioxid aus der Eisen- und Stahlproduktion zu reduzieren und gleichzeitig die im Produktionsprozess anfallende Schlacke als einen hochwertigen Rohstoff für die Kalksteinproduktion zu nutzen.

### LÖSUNG DES PROBLEMS

Die Aufgabe wird mit den Merkmalen der unabhängigen Ansprüche 1 und 12 gelöst. Die abhängigen Ansprüche sind auf besondere Ausführungsformen der Erfindung gerichtet. Erfindungsgemäß umfasst ein Verfahren zur Implementierung eines Kalk-Kohlendioxid-Kreislaufs bei der Eisen- und Stahlproduktion den Schritt (a) des Bereitstellens von Calciumoxid-haltiger, CaO-haltiger, Schlacke aus dem Eisen- und Stahlproduktionsprozess in mindestens einem Lösebehälter. Die Art der verwendeten Schlacke ist dabei erfindungsgemäß nicht eingeschränkt. So lange die Schlacke Calciumoxid-haltig ist, kann jede Art von Schlacke in dem erfindungsgemäßen Verfahren verwendet werden, wie etwa Eisenhüttenschlacken. Beispielsweise kann als Schlacke die basische Schlacke aus einem Kupolofen verwendet werden, deren Zusammensetzung in der folgenden Tabelle 1 beispielhaft gezeigt ist:

**Tabelle 1: Zusammensetzung von Kupolofenschlacke**

| | |
|---|---|
| SiO₂ | 25 bis 30% |
| CaO | 45 bis 55% |
| FeO | 0,5 bis 2,5% |
| Al₂O₃ | 5 bis 15% |
| MgO | 1 bis 2% |
| MnO | 1 bis 2% |

Wie aus Tabelle 1 ersichtlich, enthält Kupolofenschlacke beispielsweise 45 bis 55% Calciumoxid.

Neben Kupolofenschlacke kann beispielsweise auch Stahlwerksschlacke, beispielsweise LD Schlacke, verwendet werden, deren Zusammensetzung in der folgenden Tabelle 2 beispielhaft gezeigt ist:

**Tabelle 2: Zusammensetzung von Stahlwerkschlacke in Massen-%**

| | |
|---|---|
| SiO₂ | 11 bis 18% |
| CaO | 45 bis 54% |
| Fe_{ges} | 14 bis 19% |
| Al₂O₃ | 1 bis 4% |
| MgO | 1 bis 4% |
| Mn_{ges} | 1 bis 4% |

Wie aus Tabelle 2 ersichtlich, enthält Stahlwerkschlacke beispielsweise 45 bis 54 Massen-% Calciumoxid.

In einer bevorzugten Ausführungsform kann die Schlacke gemahlen mit einem durchschnittlichen Körnungsdurchmesser von 0,5 mm bis 1,5 mm in dem mindestens einen Lösebehälter bereitgestellt sein. Besonders bevorzugt kann die Schlacke mit einem durchschnittlichen Körnungsdurchmesser von 1 mm in dem mindestens einen Lösebehälter bereitgestellt sein. Auf diese Weise kann vorteilhaft die Oberfläche der Schlacke für den Schritt des Lösens des Calciumoxids durch Inkontaktbringen mit Prozesswasser vergrößert werden. Der durchschnittliche Körnungsdurchmesser kann dabei mittels Siebanalyse, beispielsweise gemäß den Normen DIN 66165-1 und DIN 66165-2, ermittelt werden.

Erfindungsgemäß umfasst das Verfahren zur Implementierung eines Kalk-Kohlendioxid-Kreislaufs bei der Eisen- und Stahlproduktion weiterhin den Schritt (b) des Inkontaktbringens der Schlacke mit Prozesswasser und des Lösens des Calciumoxids durch Bildung von Calciumhydroxid. Die Art und Weise des Inkontaktbringens ist dabei erfindungsgemäß nicht eingeschränkt und kann beispielsweise lediglich das Einbringen von Prozesswasser in den mindestens einen Lösebehälter umfassen. Bevorzugt wird jedoch das Prozesswasser zum Lösen des Calciumoxids aus der Schlacke in einem Kreislauf von unten nach oben durch den mindestens einen Lösebehälter gepumpt, besonders bevorzugt mit einer Fließgeschwindigkeit von 1 cm/s. Auf diese Weise kann vorteilhaft der Löseprozess des Calciumoxids beschleunigt werden.

In einer bevorzugten Ausführungsform kann im Schritt des Inkontaktbringens der Schlacke mit Prozesswasser und des Lösens des Calciumoxids durch Bildung von Calciumhydroxid ein Massenverhältnis von Prozesswasser zu Schlacke von 1:3 eingestellt werden.

In einer überdies bevorzugten Ausführungsform kann im Schritt des Inkontaktbringens der Schlacke mit Prozesswasser und des Lösens des Calciumoxids durch Bildung von Calciumhydroxid das Inkontaktbringen mit Prozesswasser erfolgen, bis ein pH-Wert des Prozesswassers in einem Bereich von 10 bis 12 liegt, bevorzugt jedoch in einem Bereich von 10 bis 11,5, besonders bevorzugt in einem Bereich von 10 bis 10,5.

Zum Inkontaktbringen und Lösen kann vorteilhaft regional vorliegendes Leitungswasser, beispielsweise Stadtwasser als Prozesswasser verwendet werden. Alternativ, oder zusätzlich, kann auch bereits im Prozess befindliches Prozesswasser erneut zum Lösen des Calciumoxids verwendet werden. Reines Wasser hat im Allgemeinen einen pH-Wert in einem Bereich von 7 bis 7,5. Während des Inkontaktbringens mit der Schlacke wird nach und nach immer mehr Calciumoxid in Form von Calciumhydroxid (Ca(OH)₂) aus der Schlacke herausgelöst gemäß der folgenden Reaktionsgleichung (1):

CaO + H₂O → Ca(OH)₂ (1)

Calciumhydroxid reagiert basisch. Daher steigt im Verlauf des Löseprozesses der pH-Wert des Prozesswassers an, ausgehend von dem pH-Wert reinen Wassers von 7 bis 7,5 als Eingangswert bis auf einen Ausgangswert, welcher in einem Bereich von 10 bis 12 liegen kann gemäß einer Ausführungsform. Somit kann das Erreichen des pH-Wertes im Bereich von pH 10 bis 12 als Schwellenbereich für das Beenden des Löseprozesses des Calciumoxids aus der Schlacke angenommen werden.

Zusätzlich hierzu, oder alternativ, kann auch der pH-Wert während des Durchströmens des Lösebehälters mit Prozesswasser gemessen werden, solange bis der pH-Wert als Funktion der Zeit sich nicht mehr signifikant erhöht. Signifikant bedeutet in diesem Zusammenhang konstant in einem pH Bereich von ± 0,5, vorzugsweise in einem Bereich von ± 0,2. Hierzu kann vorteilhaft der pH-Wert am Eingang und am Ausgang des mindestens einen Lösebehälters gemessen und die Differenz beider Werte bestimmt werden.

Ist der Schwellenbereich erreicht und/oder ändert sich der pH-Wert als Funktion der Zeit nicht mehr signifikant, so wird angenommen, dass sich der gesamte Anteil an lösbarem Calciumoxid aus der Schlacke herausgelöst hat und der Löseprozess beendet ist. An dieser Stelle kann dann die Schlacke ausgetauscht werden und ein erneuter Löseprozess begonnen werden. Die restliche Schlacke ist nach dem Herauslösen des Calciumoxids pH neutral und kann beispielsweise als Zusatz für die Bauindustrie eingesetzt werden.

In einer bevorzugten Ausführungsform kann das Verfahren zur Implementierung eines Kalk-Kohlendioxid-Kreislaufs bei der Eisen- und Stahlproduktion weiterhin zwischen Schritt (b) und Schritt (c) den Schritt (bi) des Filterns des Calciumhydroxids aus dem Prozesswasser mittels eines Filtermediums in mindestens einem Filterbehälter umfassen. Vorteilhaft können der Löseprozess und der Prozess des Filterns als ein Fluidkreislauf geführt werden. Auf diese Weise kann das gebildete Calciumhydroxid direkt aus dem Prozesswasser herausgefiltert werden. Da die Löslichkeit von Calciumhydroxid in Wasser lediglich 1,7g/l beträgt, fällt dieses nach der Reaktion gemäß Reaktionsgleichung (1) aus. Dann kann weiterhin das Verfahren zur Implementierung eines Kalk-Kohlendioxid-Kreislaufs bei der Eisen- und Stahlproduktion gemäß einer bevorzugten Ausführungsform den Schritt des Spülens des Filtermediums mit Prozesswasser umfassen. Wie bereits beschrieben kann das nach erfolgter Reaktion gemäß Reaktionsgleichung (1) ausgefallene Calciumhydroxid im Filtrierschritt (bi) gemäß einer Ausführungsform des erfindungsgemäßen Verfahrens aus dem Prozesswasser entfernt und mittels eines Filtermediums in mindestens einem Filterbehälter aufgefangen werden. In einer bevorzugten Ausführungsform kann dann das Filtermedium mit Prozesswasser gespült werden, sobald ein gemessener Differenzdruck am Eingang und am Ausgang des mindestens einen Filterbehälters einen Schwellendruck überschreitet. Durch das sich im Filtermedium ansammelnde Calciumhydroxid steigt der Differenzdruck vom Eingang zum Ausgang des mindestens einen Filterbehälters. Hier kann dann vorteilhaft ein Schwellenwert festgelegt werden, oberhalb welchem das Calciumhydroxid aus dem Filtermedium ausgespült wird. Durch das Trennen des Calciumhydroxids von der restlichen Schlacke können besonders vorteilhaft Verunreinigungen des späteren Endprodukts, des Kalksteins, durch weitere Bestandteile aus der Schlacke vermieden werden. Außerdem kann auf diese Weise vorteilhaft die Konzentration des Calciumhydroxids im Prozesswasser für die folgende Reaktion mit Kohlendioxid bestimmt und eingestellt werden.

Im Anschluss an das Spülen des Filtermediums kann das Calciumhydroxid und das Prozesswasser in einen beheizten Reaktionsbehälter gefördert werden. Der Reaktionsbehälter kann auf 60°C oder mehr aufgeheizt werden. Durch das Erhitzen kann vorteilhaft das Zersetzen des durch Reaktion von Calciumhydroxid mit Kohlendioxid gebildeten Calciumcarbonats verhindert werden. Der Reaktionsbehälter kann mit gereinigtem Produktionsabgas über eine Mantelheizung beheizt werden. Im Allgemeinen wird Produktionsabgas (Hochofenabgas aus der Eisen- und Stahlproduktion) bei jedem Hochofen als Teil des Prozesses gereinigt, beispielsweise über Filter oder ähnliches. Das Abgas hat dabei je nach Art der Reinigung zwischen 120 und 400°C. Auf diese Weise kann vorteilhaft Energie gespart werden, indem die bereits vorhandene Wärme des Produktionsabgases genutzt wird.

Das Verfahren zur Implementierung eines Kalk-Kohlendioxid-Kreislaufs bei der Eisen- und Stahlproduktion kann weiterhin den Schritt des Einleitens von gereinigtem Kohlendioxid-haltigem Produktionsabgas in den Reaktionsbehälter zur Bildung von Calciumcarbonat umfassen. Das im Produktionsabgas enthaltene Kohlendioxid reagiert gemäß der folgenden Reaktionsgleichung (2) mit dem im Reaktionsbehälter vorliegenden Calciumhydroxid zu Calciumcarbonat:

Ca(OH)₂ + CO₂ → CaCOs + H₂O (2)

Wie bereits beschrieben, kann durch das Erhitzen des Reaktionsbehälters auf 60°C oder mehr vorteilhaft eine Zersetzung des Calciumcarbonats gemäß der folgenden Reaktionsgleichung (3) verhindert werden.

CaCO₃ + H₂O + CO₂ → Ca²⁺ + 2 HCO₃- (3)

in dem Reaktionsbehälter kann ein Massenverhältnis von Calciumhydroxid zu Kohlendioxid von 1:0,6 eingestellt werden. Auf diese Weise kann vorteilhaft ein Kohlendioxidüberschuss vermieden werden, welcher den pH-Wert während der Reaktion in den sauren Bereich verschieben und somit die Bildung von Calciumcarbonat verhindern würde. Der Anteil an Kohlendioxid kann dabei mittels Analyse des Produktionsabgases vor Einleiten in den Reaktionsbehälter festgestellt werden.

Das Verfahren zur Implementierung eines Kalk-Kohlendioxid-Kreislaufs bei der Eisen- und Stahlproduktion kann weiterhin den Schritt des Förderns des gebildeten Calciumcarbonats und des Prozesswassers über ein Kalkgranulatbett in einen Tank umfassen, so dass sich das gebildete Calciumcarbonat an dem Kalkgranulat anlagert und Kalkstein gebildet wird. Wie bereits beschrieben, entsteht aus der Reaktion von Calciumhydroxid und Kohlendioxid Calciumcarbonat. Nach erfolgter Reaktion fällt das Calciumcarbonat aus und kann sich am Boden des Reaktionsbehälters absetzen. Von dort aus kann es dann über ein Kalkgranulatbett in einen Tank gefördert werden. Das Kalkgranulat kann dabei vorteilhaft eine poröse Struktur aufweisen, in welcher sich Calciumcarbonatpartikel anlagern können. Sobald das Kalkgranulat durch die Anlagerung der Calciumcarbonatpartikel die poröse Struktur verloren hat, kann es ausgetauscht werden. Das im Tank anfallende Prozesswasser kann dann wieder rückgeführt werden, um in Schritt (a) des Verfahrens erneut eingesetzt zu werden. Durch in Bewegung halten der Reaktanden, Produkte und des Prozesswassers, kann das gebildete Calciumcarbonat jedoch im Prozesswasser verteilt bzw. suspendiert werden und setzt sich nicht am Boden ab.

In einer bevorzugten Ausführungsform kann das Verfahren überdies weiterhin den Schritt umfassen (f) Einbringen des gebildeten Kalksteins in den Eisen- und Stahlproduktionsprozess. Auf diese Weise kann vorteilhaft der entstandene Kalkstein wieder in den Produktionsprozess rückgeführt werden. Überdies kann aus dem entstandenen Kalkstein auch wiederum neues Kalkgranulat gebrochen werden, welches im oben beschriebenen Verfahrensschritt erneut eingesetzt werden kann. Der entstandene Kalkstein ist darüber hinaus ebenfalls ein qualitativ hochwertiges Endprodukt, da gemäß einer bevorzugten Ausführungsform durch den durchgeführten Filtrierschritt (bi) mögliche Verunreinigungen durch weitere Bestandteile der Schlacke vermieden werden können.

In einer weiteren bevorzugten Ausführungsform des oben beschriebenen Verfahrens, können die Schritte (a) bis (bi) parallel in drei oder mehr Lösebehältern und drei oder mehr Filterbehältern durchgeführt werden, wobei das Calciumhydroxid und das Prozesswasser nach dem Spülen der Filtermedien in einem Zwischenbehälter gesammelt werden kann, bevor es in den beheizten Reaktionsbehälter gefördert werden kann. Durch die parallele Führung von drei oder mehr Lösebehältern in Verbindung mit jeweils drei oder mehr Filterbehältern kann der Durchsatz an Schlacke und entsprechend auch die Menge an herausgelöstem Calciumoxid deutlich erhöht werden, sowie die Dauer des Löseprozesses reduziert werden.

Ein erfindungsgemäßes Verfahren zur Implementierung eines Kalk-Kohlendioxid-Kreislaufs bei der Eisen- und Stahlproduktion umfasst die folgenden Schritte:
(a) Bereitstellen von Calciumoxid-haltiger Schlacke aus dem Eisen- und Stahlproduktionsprozess in mindestens einem Lösebehälter;
(b) Inkontaktbringen der Schlacke mit Prozesswasser und Lösen des Calciumoxids durch Bildung von Calciumhydroxid;
(c) Fördern des Calciumhydroxids und des Prozesswassers in ein Reaktionsbecken;
(d) Einleiten unter Rühren von gereinigtem Kohlendioxid-haltigem Produktionsabgas in das Reaktionsbecken zur Bildung von Calciumcarbonat; und
(e) Fördern des gebildeten Calciumcarbonats und des Prozesswassers in mindestens ein Absetzbecken, so dass sich das gebildete Calciumcarbonat in dem mindestens einen Absetzbecken absetzt, wobei das Absetzbecken ein Kalkgranulatbett aufweist, so dass sich das gebildete Calciumcarbonat an dem Kalkgranulat anlagert und Kalkstein gebildet wird.

Wie bereits beschrieben ist die Art der verwendeten Schlacke erfindungsgemäß nicht eingeschränkt. So lange die Schlacke Calciumoxid-haltig ist, kann jede Art von Schlacke verwendet werden, etwa Eisenhüttenschlacken. Beispielsweise kann als Schlacke auch die basische Schlacke aus einem Kupolofen verwendet werden, deren Zusammensetzung in der obigen Tabelle 1 beispielhaft gezeigt ist. Wie aus Tabelle 1 ersichtlich, enthält Kupolofenschlacke beispielsweise 45 bis 55% Calciumoxid. Neben Kupolofenschlacke kann beispielsweise auch Stahlwerksschlacke (LD-Schlacke) verwendet, deren Zusammensetzung in der obigen Tabelle 2 beispielhaft gezeigt ist. Wie aus Tabelle 2 ersichtlich, enthält Stahlwerkschlacke beispielsweise 45 bis 54 Massen-% Calciumoxid.

In einer bevorzugten Ausführungsform kann die Schlacke gemahlen mit einem durchschnittlichen Körnungsdurchmesser von 0,5 mm bis 1,5 mm in dem mindestens einen Lösebehälter bereitgestellt sein. Besonders bevorzugt kann die Schlacke mit einem durchschnittlichen Körnungsdurchmesser von 1 mm in dem mindestens einen Lösebehälter bereitgestellt sein. Auf diese Weise kann vorteilhaft die Oberfläche der Schlacke für den Schritt des Lösens des Calciumoxids durch Inkontaktbringen mit Prozesswasser vergrößert werden. Der durchschnittliche Körnungsdurchmesser kann dabei mittels Siebanalyse, beispielsweise gemäß den Normen DIN 66165-1 und DIN 66165-2, ermittelt werden.

Erfindungsgemäß umfasst das Verfahren zur Implementierung eines Kalk-Kohlendioxid-Kreislaufs bei der Eisen- und Stahlproduktion den Schritt (b) des Inkontaktbringens der Schlacke mit Prozesswasser und des Lösens des Calciumoxids durch Bildung von Calciumhydroxid. Die Art und Weise des Inkontaktbringens ist, wie oben beschrieben, erfindungsgemäß nicht eingeschränkt und kann beispielsweise lediglich das Einbringen von Prozesswasser in den mindestens einen Lösebehälter umfassen. Bevorzugt wird jedoch das Prozesswasser zum Lösen des Calciumoxids aus der Schlacke in einem Kreislauf von unten nach oben durch den mindestens einen Lösebehälter gepumpt, besonders bevorzugt mit einer Fließgeschwindigkeit von 1 cm/s. Auf diese Weise kann vorteilhaft der Löseprozess des Calciumoxids beschleunigt werden.

In einer bevorzugten Ausführungsform kann im Schritt des Inkontaktbringens der Schlacke mit Prozesswasser und des Lösens des Calciumoxids durch Bildung von Calciumhydroxid ein Massenverhältnis von Prozesswasser zu Schlacke von 1:3 eingestellt werden.

In einer überdies bevorzugten Ausführungsform kann im Schritt des Inkontaktbringens der Schlacke mit Prozesswasser und des Lösens des Calciumoxids durch Bildung von Calciumhydroxid das Inkontaktbringen mit Prozesswasser erfolgen, bis ein pH-Wert des Prozesswassers in einem Bereich von 10 bis 12 liegt, bevorzugt jedoch in einem Bereich von 10 bis 11,5, besonders bevorzugt in einem Bereich von 10 bis 10,5.

Zum Inkontaktbringen und Lösen kann vorteilhaft regional vorliegendes Leitungswasser, beispielsweise Stadtwasser als Prozesswasser verwendet werden. Alternativ, oder zusätzlich, kann auch bereits im Prozess befindliches Prozesswasser erneut zum Lösen des Calciumoxids verwendet werden. Reines Wasser hat im Allgemeinen einen pH-Wert in einem Bereich von 7 bis 7,5. Während des Inkontaktbringens mit der Schlacke wird nach und nach immer mehr Calciumoxid in Form von Calciumhydroxid (Ca(OH)₂) aus der Schlacke herausgelöst gemäß der obigen Reaktionsgleichung (1).

Calciumhydroxid reagiert basisch. Daher steigt im Verlauf des Löseprozesses der pH-Wert des Prozesswassers an, ausgehend von dem pH-Wert reinen Wassers von 7 bis 7,5 als Eingangswert bis auf einen Ausgangswert, welcher in einem Bereich von 10 bis 12 liegen kann gemäß einer Ausführungsform. Somit kann das Erreichen des pH-Wertes im Bereich von pH 10 bis 12 als Schwellenbereich für das Beenden des Löseprozesses des Calciumoxids aus der Schlacke angenommen werden.

Zusätzlich hierzu, oder alternativ, kann auch der pH-Wert während des Durchströmens des Lösebehälters mit Prozesswasser gemessen werden, solange bis der pH-Wert als Funktion der Zeit sich nicht mehr signifikant erhöht. Signifikant bedeutet in diesem Zusammenhang konstant in einem pH Bereich von ± 0,5, vorzugsweise in einem Bereich von ± 0,2. Hierzu kann vorteilhaft der pH-Wert am Eingang und am Ausgang des mindestens einen Lösebehälters gemessen und die Differenz beider Werte bestimmt werden.

Ist der Schwellenbereich erreicht und/oder ändert sich der pH-Wert als Funktion der Zeit nicht mehr signifikant, so wird angenommen, dass sich der gesamte Anteil an lösbarem Calciumoxid aus der Schlacke herausgelöst hat und der Löseprozess beendet ist. An dieser Stelle kann dann die Schlacke ausgetauscht werden und ein erneuter Löseprozess begonnen werden. Die restliche Schlacke ist nach dem Herauslösen des Calciumoxids pH neutral und kann beispielsweise als Zusatz für die Bauindustrie eingesetzt werden. Gemäß dem erfindungsgemäßen Verfahren wird das in Schritt (b) gebildete Calciumhydroxid gemeinsam mit dem Prozesswasser in einem Schritt (c) in ein Reaktionsbecken gefördert.

Der Begriff Reaktionsbecken ist hierin breit auszulegen. Ein Reaktionsbecken kann sowohl ein einfaches Becken oder eine Wanne umfassen, (zumindest teilweise) mit oder ohne Abdeckung, aber beispielsweise auch einen Reaktionsbehälter, der (zumindest teilweise) offen oder geschlossen sein kann, oder auch wie hierin beschrieben. Das Reaktionsbecken ist dabei lediglich insoweit eingeschränkt, als dass die Reaktion unter Rühren gemäß der obigen Reaktionsgleichung (2) durchgeführt werden kann.

Das Reaktionsbecken kann vorteilhaft beheizt sein, beispielsweise durch eine Mantelheizung mit gereinigtem Produktionsabgas oder eine andere Art der Kontaktheizung. Gemäß einer bevorzugten Ausführungsform kann das Reaktionsbecken auf 60°C oder mehr aufgeheizt werden. Durch das Erhitzen kann vorteilhaft das Zersetzen des durch Reaktion von Calciumhydroxid mit Kohlendioxid gebildeten Calciumcarbonats verhindert werden. Im Allgemeinen wird Produktionsabgas (Hochofenabgas anfallend bei der Eisen- und Stahlproduktion) bei jedem Hochofen als Teil des Prozesses gereinigt, beispielsweise über Filter oder ähnliches. Das Abgas hat dabei je nach Art der Reinigung zwischen 120 und 400°C. Auf diese Weise kann vorteilhaft Energie gespart werden, indem die bereits vorhandene Wärme des Produktionsabgases genutzt wird.

In Schritt (d) des erfindungsgemäßen Verfahrens zur Implementierung eines Kalk-Kohlendioxid-Kreislaufs bei der Eisen- und Stahlproduktion wird unter Rühren gereinigtes Kohlendioxid-haltiges Produktionsabgas in das Reaktionsbecken, vorzugsweise von unten, eingeleitet zur Bildung von Calciumcarbonat. Das im Produktionsabgas enthaltene Kohlendioxid reagiert gemäß der obigen Reaktionsgleichung (2) mit dem im Reaktionsbecken vorliegenden Calciumhydroxid zu Calciumcarbonat.

Durch das Einleiten unter Rühren kann vorteilhaft das Produktionsabgas in Blasen, vorzugsweise Mikroblasen, zerschlagen und somit die Grenzfläche für die Reaktion zwischen Kohlendioxid und Calciumhydroxid vergrößert werden.

Wie bereits beschrieben, kann durch das Erhitzen des Reaktionsbeckens auf 60°C oder mehr vorteilhaft eine Zersetzung des Calciumcarbonats gemäß der obigen Reaktionsgleichung (3) verhindert werden.

Gemäß einer bevorzugten Ausführungsform kann in dem Reaktionsbecken ein Massenverhältnis von Calciumhydroxid zu Kohlendioxid von 1:0,6 eingestellt werden. Auf diese Weise kann vorteilhaft ein Kohlendioxidüberschuss vermieden werden, welcher den pH-Wert während der Reaktion in den sauren Bereich verschieben und somit die Bildung von Calciumcarbonat verhindern würde. Der Anteil an Kohlendioxid kann dabei mittels Analyse des Produktionsabgases vor Einleiten in das Reaktionsbecken festgestellt werden. Erfindungsgemäß umfasst das Verfahren zur Implementierung eines Kalk-Kohlendioxid-Kreislaufs bei der Eisen- und Stahlproduktion weiterhin den Schritt (e) des Förderns des gebildeten Calciumcarbonats und des Prozesswassers in mindestens ein Absetzbecken, so dass sich das gebildete Calciumcarbonat in dem mindestens einen Absetzbecken absetzt, wobei das Absetzbecken ein Kalkgranulatbett aufweist, so dass sich das gebildete Calciumcarbonat an dem Kalkgranulat anlagert und Kalkstein gebildet wird.

Auch der Begriff Absetzbecken ist hierin breit auszulegen. Ein Absetzbecken kann ein einfaches Becken oder eine Wanne sein, offen oder (zumindest teilweise) geschlossen. Das Absetzbecken kann dabei aber beispielsweise auch ein Tank sein wie hierin beschrieben.

Wie bereits beschrieben, entsteht aus der Reaktion von Calciumhydroxid und Kohlendioxid Calciumcarbonat. Durch das in Bewegung halten der im Reaktionsbecken befindlichen Reaktanden, Produkte und des Prozesswassers, bleibt das gebildete Calciumcarbonat im Prozesswasser verteilt bzw. suspendiert und setzt sich nicht am Boden des Reaktionsbeckens ab. Ist die Reaktion zu Calciumcarbonat beendet, so wird die Mischung aus Prozesswasser und darin verteiltem Calciumcarbonat in mindestens ein Absetzbecken gefördert. In dem mindestens einen Absetzbecken befindet sich kein Rührer, so dass sich das im Prozesswasser befindliche Calciumcarbonat am Boden des mindestens einen Absetzbeckens absetzt. Zum Trennen von Calciumcarbonat und Prozesswasser kann das mindestens eine Absetzbecken vorteilhaft einen Sandfang als Filtermedium aufweisen. Erfindungsgemäß weist das Absetzbecken ein Bett aus Kalkgranulat auf, an welches sich das gebildete Calciumcarbonat anlagern kann und Kalkstein gebildet werden kann. Der gebildete Kalkstein kann dann wieder in den Eisen- und Stahlproduktionsprozess eingebracht werden. Überdies kann aus dem entstandenen Kalkstein auch wiederum neues Kalkgranulat gebrochen werden, welches erneut in dem mindestens einen Absetzbecken eingesetzt werden kann. Der gebildete Kalkstein bildet aber auch ein qualitativ hochwertiges Endprodukt.

Das im Absetzbecken anfallende Prozesswasser kann ebenfalls wieder rückgeführt werden, um in Schritt (a) des Verfahrens erneut eingesetzt zu werden.

In einer weiteren bevorzugten Ausführungsform des oben beschriebenen Verfahrens, können die Schritte (a) und (b) parallel in drei oder mehr Lösebehältern durchgeführt werden. Durch die parallele Führung von drei oder mehr Lösebehältern kann der Durchsatz an Schlacke und entsprechend auch die Menge an herausgelöstem Calciumoxid deutlich erhöht werden, sowie die Dauer des Löseprozesses reduziert werden. Entsprechend können dann in Schritt (c) die Größe des Reaktionsbeckens und in Schritt (d) die Anzahl und/oder Größe der Absetzbecken angepasst werden.

Erfindungsgemäß umfasst ein System für die Implementierung eines Kalk-Kohlendioxid-Kreislaufs bei der Eisen- und Stahlproduktion (a) mindestens einen Lösebehälter. In dem mindestens einen Lösebehälter wird Schlacke bereitgestellt, aus welcher durch das Inkontaktbringen mit Prozesswasser Calciumoxid durch Bildung von Calciumhydroxid herausgelöst wird.

Gemäß einer bevorzugten Ausführungsform kann das erfindungsgemäße System außerdem mindestens einen Filterbehälter mit einem Filtermedium umfassen, wobei der mindestens eine Filterbehälter mit dem mindestens einen Lösebehälter durch einen Fluidkreislauf in Verbindung stehen kann. Vorteilhaft kann der Fluidkreislauf ein Pumpkreislauf sein, bei welchem das Prozesswasser von unten nach oben durch den mindestens einen Lösebehälter gepumpt werden kann, anschließend den mindestens einen Filterbehälter von oben nach unten durchläuft und schließlich wieder durch den mindestens einen Lösebehälter gepumpt werden kann bis der Löseprozess abgeschlossen ist. In einer bevorzugten Ausführungsform kann in dem Fluidkreislauf zwischen dem mindestens einen Lösebehälter und dem mindestens einen Filterbehälter mindestens ein pH-Wert Messgerät und mindestens ein Drucksensor vorgesehen sein. Vorzugsweise ist das mindestens eine pH-Wert Messgerät im Fluidstrom stromabwärts von dem mindestens einen Lösebehälter, also ausgangsseitig, angebracht. Auf diese Weise kann vorteilhaft der pH-Wert des Prozesswassers nach Durchlaufen des Lösebehälters bestimmt und über den gemessenen pH-Wert der Fortschritt des Löseprozesses überwacht werden.

Besonders bevorzugt weist der Fluidkreislauf zwischen dem mindestens einen Lösebehälter und dem mindestens einen Filterbehälter jedoch zwei pH-Wert Messgeräte auf, eines im Fluidstrom stromaufwärts des mindestens einen Lösebehälters, also eingangsseitig, und eines im Fluidstrom stromabwärts des mindestens einen Lösebehälters, also ausgangsseitig. Auf diese Weise kann vorteilhaft ein Differenzwert aus dem eingangsseitig und ausgangsseitig gemessenen pH-Wert gebildet werden, um so den Fortschritt des Löseprozesses über den Differenzwert zu überwachen.

Der mindestens eine Drucksensor ist vorteilhaft im Fluidstrom stromabwärts des mindestens einen Filterbehälters angeordnet, um so den Druckverlauf während des Filtrierens des Calciumhydroxids aus dem Prozesswasser im Verlauf des Löseprozesses überwachen zu können. Besonders bevorzugt weist der Fluidkreislauf zwischen dem mindestens einen Lösebehälter und dem mindestens einen Filterbehälter jedoch zwei Drucksensoren auf, einen im Fluidstrom stromaufwärts des mindestens einen Filterbehälters, also eingangsseitig, und einen im Fluidstrom stromabwärts des mindestens einen Filterbehälters, also ausgangsseitig. Auf diese Weise kann vorteilhaft ein Differenzdruck ermittelt werden und bei Überschreiten eines festgelegten Schwellendrucks das Filtermedium in dem mindestens einen Filterbehälter gespült werden. Das in dem mindestens einen Filterbehälter verwendete Filtermedium ist erfindungsgemäß nicht eingeschränkt. Als Filtermedium können alle Filterarten eingesetzt werden wie beispielsweise Medienfilter, etwa Glas oder Sandfilter, Beutelfilter oder auch Zyklonfilter. In einer bevorzugten Ausführungsform kann der mindestens eine Filterbehälter jedoch einen Sandfilter als Filtermedium enthalten.

Das System kann weiterhin einen Reaktionsbehälter mit einer Mantelheizung umfassen, welcher dem mindestens einen Filterbehälter nachgeschaltet sein kann. Der Reaktionsbehälter kann als Flotation ausgebildet sein. Vorteilhaft kann in der Flotation ein Rührer mit entsprechender Geometrie eingesetzt sein, welcher das eingeleitete Produktionsabgas in Mikroblasen zerschlägt und somit die Grenzfläche für die Reaktion zwischen Kohlendioxid und Calciumhydroxid vergrößert. Im Allgemeinen wird Flotation eingesetzt, um feinste Feststoffe voneinander zu trennen. Dies kann vorliegend vorteilhaft dazu genutzt werden, Calciumcarbonat und eventuell noch vorhandene Schmutzpartikel aus der Schlacke zu separieren, indem die Schmutzpartikel mit dem in der Flotation entstehenden Schaum abgetragen werden können.

Das System kann überdies einen Tank mit einem Kalkgranulatbett umfassen, welcher dem Reaktionsbehälter nachgeschaltet sein kann. Das Kalkgranulatbett fungiert als eine Art Filtermedium für die im Reaktionsbehälter entstehenden Calciumcarbonatpartikel, welche sich an dem Kalkgranulat anlagern und somit aus dem Prozesswasser herausgefiltert werden können. Das in dem Tank gesammelte Prozesswasser kann von dort aus dann wieder dem mindestens einen Lösebehälter zugeführt werden. Der durch die Anlagerung der Calciumcarbonatpartikel entstehende Kalkstein kann wieder in den Eisen und Stahlproduktionsprozess rückgeführt werden. Überdies kann zusätzlich ein Anteil gebrochen und als neues Kalkgranulat in dem Tank eingesetzt werden und/oder als hochwertiges Endprodukt weiterverwendet werden. Darüber hinaus kann außerdem die Restschlacke, die den Löseprozess im Lösebehälter durchlaufen hat, in der Baustoffindustrie vielfältig weiter genutzt werden.

In einer weiterhin bevorzugten Ausführungsform kann das System drei oder mehr jeweils durch einen Fluidkreislauf miteinander in Verbindung stehende Lösebehälter und Filterbehälter umfassen, wobei ein Zwischenbehälter den drei oder mehr Filterbehältern nachgeschaltet und dem Reaktionsbehälter vorgeschaltet sein kann. Auf diese Weise kann das in dem Löseprozess entstehende Calciumhydroxid zusammen mit Prozesswasser in dem Zwischenbehälter gesammelt und dann von dort aus kontrolliert dem Reaktionsbehälter zugeführt werden. Dies ermöglicht etwa, ein Massenverhältnis von Kohlendioxid zu Calciumhydroxid von 1:0,6 in dem Reaktionsbehälter noch genauer einstellen zu können.

Vorzugsweise können überdies die Wandung des Reaktionsbehälters sowie alle mit dem Prozesswasser in Berührung kommenden Teile des Systems gegen Kalkablagerungen beschichtet sein. Zum Beispiel mit einer Hightech-Beschichtung der Surcoatec Deutschland GmbH.

Ein erfindungsgemäßes Systems für die Implementierung eines Kalk-Kohlendioxid-Kreislaufs bei der Eisen- und Stahlproduktion, umfasst:
(a) mindestens einen Lösebehälter;
(b) ein Reaktionsbecken mit einem Rührer, welches dem mindestens einen Lösebehälter nachgeschaltet ist; und
(c) mindestens ein Absetzbecken, welches dem Reaktionsbecken nachgeschaltet ist, wobei das Absetzbecken ein Kalkgranulatbett aufweist.

Erfindungsgemäß umfasst ein System für die Implementierung eines Kalk-Kohlendioxid-Kreislaufs bei der Eisen- und Stahlproduktion, wie oben bereits beschrieben, (a) mindestens einen Lösebehälter. In dem mindestens einen Lösebehälter wird Schlacke bereitgestellt, aus welcher durch das Inkontaktbringen mit Prozesswasser Calciumoxid durch Bildung von Calciumhydroxid herausgelöst wird.

Das Inkontaktbringen des Calciumoxids mit Wasser in dem mindestens einen Lösebehälter kann vorteilhaft mittels eines Fluidkreislaufs implementiert sein, der durch den Lösebehälter geführt ist. Vorteilhaft kann der Fluidkreislauf ein Pumpkreislauf sein, bei welchem das Prozesswasser von unten nach oben durch den mindestens einen Lösebehälter gepumpt werden kann bis der Löseprozess abgeschlossen ist. In dem Fluidkreislauf kann mindestens ein pH-Wert Messgerät vorgesehen sein. Vorzugsweise ist das mindestens eine pH-Wert Messgerät im Fluidstrom stromabwärts von dem mindestens einen Lösebehälter, also ausgangsseitig, angebracht. Auf diese Weise kann vorteilhaft der pH-Wert des Prozesswassers nach Durchlaufen des Lösebehälters bestimmt und über den gemessenen pH-Wert der Fortschritt des Löseprozesses überwacht werden.

Besonders bevorzugt weist der Fluidkreislauf jedoch zwei pH-Wert Messgeräte auf, eines im Fluidstrom stromaufwärts des mindestens einen Lösebehälters, also eingangsseitig, und eines im Fluidstrom stromabwärts des mindestens einen Lösebehälters, also ausgangsseitig. Auf diese Weise kann vorteilhaft ein Differenzwert aus dem eingangsseitig und ausgangsseitig gemessenen pH-Wert gebildet werden, um so den Fortschritt des Löseprozesses über den Differenzwert zu überwachen.

Das erfindungsgemäße System umfasst weiterhin (b) ein Reaktionsbecken mit einem Rührer, welches dem mindestens einen Lösebehälter nachgeschaltet ist. Der Rührer, mit entsprechender Geometrie eingesetzt, kann vorteilhaft das eingeleitete Produktionsabgas in Blasen, vorzugsweise Mikroblasen, zerschlagen und somit die Grenzfläche für die Reaktion zwischen Kohlendioxid und Calciumhydroxid vergrößern.

Das erfindungsgemäße System umfasst überdies (c) mindestes ein Absetzbecken, welches dem Reaktionsbecken nachgeschaltet ist, wobei das Absetzbecken ein Kalkgranulatbett aufweist. Dabei kann das Reaktionsbecken vorteilhaft als Überlaufbecken ausgestaltet sein, um die Mischung aus Calciumcarbonat und Prozesswasser nach erfolgter Reaktion in das mindestens eine Absetzbecken zu fördern. In dem Absetzbecken kann sich das gebildete Calciumcarbonat am Boden sammeln/absetzen. Zur Trennung von Calciumcarbonat und Prozesswasser kann das mindestens eine Absetzbecken vorteilhaft einen Sandfang als Filtermedium aufweisen. Erfindungsgemäß weist das mindestens eine Absetzbecken ein Kalkgranulatbett auf. Das Kalkgranulatbett fungiert ebenfalls als eine Art Filtermedium für die im Reaktionsbecken entstehenden Calciumcarbonatpartikel, welche sich an dem Kalkgranulat anlagern und somit aus dem Prozesswasser herausgefiltert werden können. Das in dem mindestens einen Absetzbecken gesammelte Prozesswasser kann von dort aus dann wieder dem mindestens einen Lösebehälter zugeführt werden. Der durch die Anlagerung der Calciumcarbonatpartikel entstehende Kalkstein kann wieder in den Eisen und Stahlproduktionsprozess rückgeführt werden. Überdies kann zusätzlich ein Anteil gebrochen und als neues Kalkgranulat in dem Absetzbecken eingesetzt werden und/oder der Kalkstein als qualitativ hochwertiges Endprodukt weiterverwendet werden. Darüber hinaus kann außerdem die Restschlacke, die den Löseprozess im Lösebehälter durchlaufen hat, in der Baustoffindustrie vielfältig weiter genutzt werden, da sie pH neutral ist.

In einer bevorzugten Ausführungsform kann das System drei oder mehr jeweils durch einen Fluidkreislauf miteinander in Verbindung stehende Lösebehälter umfassen. Das in dem Löseprozess entstehende Calciumhydroxid kann zusammen mit Prozesswasser in einem Zwischenbehälter gesammelt und dann von dort aus kontrolliert dem Reaktionsbecken zugeführt werden. Dies ermöglicht etwa, ein Massenverhältnis von Kohlendioxid zu Calciumhydroxid von 1:0,6 in dem Reaktionsbecken genauer einstellen zu können. Entsprechend der Anzahl der Lösebehälter können auch die Größe des Reaktionsbeckens und die Größe und/oder Anzahl der Absetzbecken entsprechend gewählt werden. Vorzugsweise sind überdies die Wandung des Reaktionsbeckens sowie alle mit dem Prozesswasser in Berührung kommenden Teile des Systems gegen Kalkablagerungen beschichtet. Zum Beispiel mit einer Hightech-Beschichtung der Surcoatec Deutschland GmbH.

Verbindungen zwischen den einzelnen Komponenten des Systems, wie etwa über einen Fluidkreislauf, können, wenn nicht anders beschrieben, über entsprechende Zuleitungen mit Ventil und gegebenenfalls eine oder mehrere Pumpen in analoger Weise, wie in den nachfolgenden Ausführungsbeispielen beschrieben, realisiert sein.

### KURZE BESCHREIBUNG DER FIGUREN

Figuren 1 und 2 zeigen jeweils schematisch ein System für die Implementierung eines Kalk-Kohlendioxid-Kreislaufs bei der Eisen- und Stahlproduktion gemäß Ausführungsformen.
Figur 3 zeigt ein Flussdiagramm eines Verfahrens zur Implementierung eines Kalk-Kohlendioxid-Kreislaufs bei der Eisen- und Stahlproduktion gemäß einer Ausführungsform.

### DETAILLIERTE BESCHREIBUNG DER FIGUREN UND BEVORZUGTER AUSFÜHRUNGSBEISPIELE

im Folgenden werden Beispiele bzw. Ausführungsbeispiele schematisch unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer Merkmale der beschriebenen Beispiele im Rahmen des Schutzumfanges der Ansprüche umfasst sind.

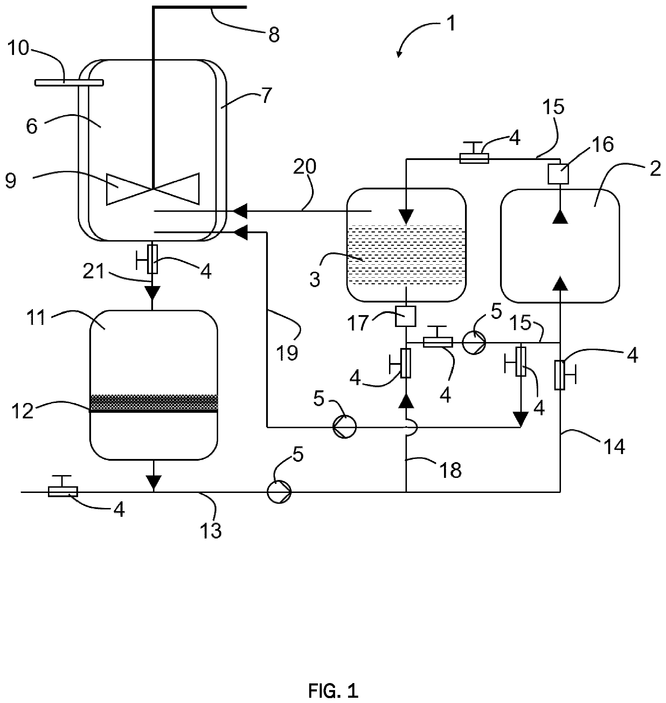

Figur 1 zeigt schematisch ein System für die Implementierung eines Kalk-Kohlendioxid-Kreislaufs in einem Hochofenprozess gemäß einer Ausführungsform. In der in Figur 1 gezeigten Ausführungsform umfasst das System 1 einen Lösebehälter 2. in dem Lösebehälter 2 wird Calciumoxid-haltige Schlacke bereitgestellt. Die Art der Schlacke ist dabei erfindungsgemäß nicht eingeschränkt, solange sie Calciumoxid-haltig ist. Bevorzugt wird jedoch Schlacke aus der Eisenverhüttung verwendet. Wie in Tabelle 1 gezeigt, kann beispielsweise basische Schlacke aus einem Kupolofen verwendet werden oder, wie in Tabelle 2 gezeigt, Stahlwerkschlacke. Grundsätzlich kann aber jede Art von Schlacke, welche in einem Hochofenprozess anfällt, verwendet werden. Um die Grenzfläche der Schlacke für den im Lösebehälter 2 stattfindenden Löseprozess zu vergrößern, kann die Schlacke vorzugsweise gemahlen mit einem durchschnittlichen Körnungsdurchmesser von 0,5 mm bis 1,5 mm, besonders bevorzugt von 1 mm, bereitgestellt werden. Über eine Zuleitung 14 mit Ventil 4 kann dem Lösebehälter 2 von unten her (in Pfeilrichtung) Prozesswasser zugeführt werden, um das in der Schlacke vorliegende Calciumoxid in Form von Calciumhydroxid gemäß der obigen Reaktionsgleichung (1) zu lösen. Ein Massenverhältnis von Prozesswasser zu Schlacke von 1:3 kann gemäß einer bevorzugten Ausführungsform an dieser Stelle eingestellt werden.

Das Prozesswasser kann beispielsweise von einem Stadtwasseranschluss über ein Ventil 4 durch Zuleitungen 13 und 14 mittels einer Pumpe 5 dem Lösebehälter 2 zugeführt werden. Alternativ, oder zusätzlich hierzu, kann auch Prozesswasser, welches sich bereits im Kreislauf befindet, dem Lösebehälter 2 aus Tank 11 über die Zuleitungen 13 und 14 zugeführt werden.

Der Lösebehälter 2 ist mit einem Filterbehälter 3 über die Zuleitungen 15 in Form eines Fluidkreislaufs verbunden. Werden die Ventile 4 der Zuleitungen 14 und 18 geschlossen, so kann über die Zuleitungen 15 das Prozesswasser mittels einer Pumpe 5 in Pfeilrichtung während des Löseprozesses im Kreislauf durch den Lösebehälter 2 und den Filterbehälter 3 geführt werden.

Der Filterbehälter 3 dient gemäß einer Ausführungsform dazu, das Calciumhydroxid, welches durch das Lösen des Calciumoxids aus der Schlacke in Prozesswasser entsteht, aus dem Prozesswasser herauszufiltern. Das Filtermedium ist dabei erfindungsgemäß nicht eingeschränkt, es können alle Arten an Filtermedien verwendet werden, beispielsweise Medienfilter wie Glas oder Sandfilter, Beutelfilter oder Zyklonfilter. Bevorzugt kann im Filterbehälter 3 jedoch ein Sandfilter verwendet werden.

Zur Überwachung des Fortschritts des Löseprozesses kann, wie in Figur 1 gezeigt, am Ausgang des Lösebehälters 2, also stromabwärts in Fluidstromrichtung gesehen, ein pH-Wert Messgerät 16 angeordnet sein. Zu Beginn des Löseprozesses hat das dem Lösebehälter 2 zugeführte Wasser einen neutralen pH-Wert in einem Bereich von pH von 7 bis 7,5. Calciumhydroxid ist jedoch basisch, so dass während des Löseprozesses der pH-Wert ansteigt. Der pH-Wert kann demnach als ein Indikator für den Fortschritt, sowie für die Beendigung des Löseprozesses im Lösebehälter 2 dienen. In einer bevorzugten Ausführungsform kann das Inkontaktbringen der Schlacke mit Prozesswasser daher erfolgen, bis ein pH-Wert des Prozesswassers in einem Bereich von 10 bis 12 liegt, bevorzugt jedoch in einem Bereich von 10 bis 11,5, besonders bevorzugt in einem Bereich von 10 bis 10,5.

Alternativ, oder zusätzlich, kann, wie in Figur 1 gezeigt, ein Drucksensor 17 am Ausgang des Filterbehälters 3 angeordnet sein. Über den Drucksensor 17 kann ein Strömungsdruck stromabwärts überwacht werden. Durch das sich in dem Filtermedium des Filterbehälters 3 ansammelnde Calciumhydroxid nimmt der Strömungsdruck am Ausgang des Filterbehälters 3 während des Löseprozesses ab. Vorteilhaft kann ein Schwellendruck für den Strömungsdruck am Ausgang des Filterbehälters 3 vorgegeben werden, bei dessen Unterschreiten das Filtermedium im Filterbehälter 3 gespült wird.

Zum Spülen des Filtermediums im Filterbehälter 3 können die Ventile 4 der Zuleitungen 15 geschlossen und entsprechend das Ventil 4 der Zuleitung 18 geöffnet werden. Über die Zuleitung 18 kann dann das Filtermedium im Filterbehälter 3 mit Prozesswasser gespült werden. Auf diese Weise wird dann das aufgefangene Calciumhydroxid über die Zuleitung 20 in den Reaktionsbehälter 6 gefördert. Über die Zuleitung 19 kann zusätzlich weiteres Prozesswasser über die Pumpe 5 in den Reaktionsbehälter 6 gefördert werden.

Der Reaktionsbehälter 6 kann, wie in Figur 1 gezeigt, eine Mantelheizung 7 aufweisen. Mittels der Mantelheizung kann der Reaktionsbehälter 6 und damit das im Reaktionsbehälter 6 befindliche Prozesswasser aufgeheizt werden. In einer bevorzugten Ausführungsform kann der Reaktionsbehälter auf 60 °C oder mehr aufgeheizt werden. Auf diese Weise kann vorteilhaft eine Zersetzung von Calciumcarbonat verhindert werden. Bevorzugt kann die Mantelheizung 7 durch gereinigtes Produktionsabgas (Hochofenabgas) betrieben werden.

Über die Abgaszuleitung 8 kann dann gereinigtes Kohlendioxid-haltiges Produktionsabgas in den Reaktionsbehälter 6 zur Bildung von Calciumcarbonat eingeleitet werden. Als Druckausgleich und/oder zur Ausleitung von Schaum kann der Reaktionsbehälter 6 außerdem eine Ableitung 10 aufweisen. Am Ende der Abgaszuleitung 8 kann, wie in Figur 1 gezeigt, ein Rührwerk 9 angeordnet sein, welches die Grenzfläche, an welcher die Reaktion von Calciumhydroxid und Kohlendioxid zu Calciumcarbonat stattfindet, durch Blasenbildung vorteilhaft vergrößern kann.

In einer bevorzugten Ausführungsform kann in dem Reaktionsbehälter 6 ein Massenverhältnis von Calciumhydroxid zu Kohlendioxid von 1:0,6 eingestellt werden. Dies ist von Vorteil, da sich bei Überschuss an Kohlendioxid Kohlensäure bildet, welche den pH-Wert in den sauren Bereich verschieben würde und somit die Bildung von Calciumcarbonat verhindern würde. Hierzu kann beispielsweise die Menge an Calciumhydroxid aus der bekannten Filtergröße und/oder anhand des festgelegten Schwellendrucks basierend auf Referenzwerten bestimmt werden. Der Kohlendioxidanteil im gereinigten Produktionsabgas kann ebenfalls vorab durch eine Abgasanalyse bestimmt werden, beispielsweise mittels Infrarot- oder Raman-Spektroskopie, etwa über einen nichtdispersiven Infrarotsensor. Alternativ, oder zusätzlich, kann der Kohlendioxidanteil auch durch eine quantitative Bestimmung über eine Kalkwasserprobe oder mit Barytwasser ermittelt werden.

Durch in Bewegung halten der Reaktanden, Produkte und des Prozesswassers, bleibt das gebildete Calciumcarbonat im Prozesswasser verteilt bzw. suspendiert und setzt sich nach erfolgter Reaktion nicht am Boden ab. Ist die Reaktion zu Calciumcarbonat beendet, so kann die Mischung aus Prozesswasser und darin verteiltem Calciumcarbonat über die Zuleitung 21 bei geöffnetem Ventil 4 in einen Tank 11 geleitet werden. Der Tank 11, wie in Figur 1 gezeigt, weist ein Bett aus porösem Kalkgranulat auf. Das dadurch gebildete Kalkgranulatbett 12 kann dabei beispielsweise auf einem Siebboden gelagert sein. Beim Durchströmen des Kalkgranulatbetts 12 lagern sich die Calciumcarbonatpartikel an dem Kalkgranulat an und es bildet sich Kalkstein. Sobald das Kalkgranulat durch die Kalksteinbildung seine ursprüngliche Porosität verloren hat, wird es ausgetauscht. Dies ist beispielsweise durch die Bildung einer glatten Oberfläche, ähnlich der Oberfläche von Tropfstein, zu erkennen, kann aber auch anhand der verminderten Durchlässigkeit für Prozesswasser bestimmt werden. Das Prozesswasser sammelt sich im unteren Bereich des Tanks 11 und kann über die Zuleitung 13 wieder dem Prozess zugeführt werden. Der Kalkstein kann in den Produktionsprozess, beispielsweise bei der Stahlproduktion oder der Eisenverhüttung, rückgeführt werden, ein Anteil kann aber auch gebrochen und als Kalkgranulat dem Prozess wieder zugeführt werden und/oder als hochwertiges Endprodukt weiterverwendet werden. Auf diese Weise kann vorteilhaft ein Kalk-Kohlendioxid-Kreislauf bei der Eisen- und Stahlproduktion implementiert werden. Die aus dem Löseprozess hervorgehende Restschlacke kann außerdem vorteilhaft in der Baustoffindustrie weiter genutzt werden.

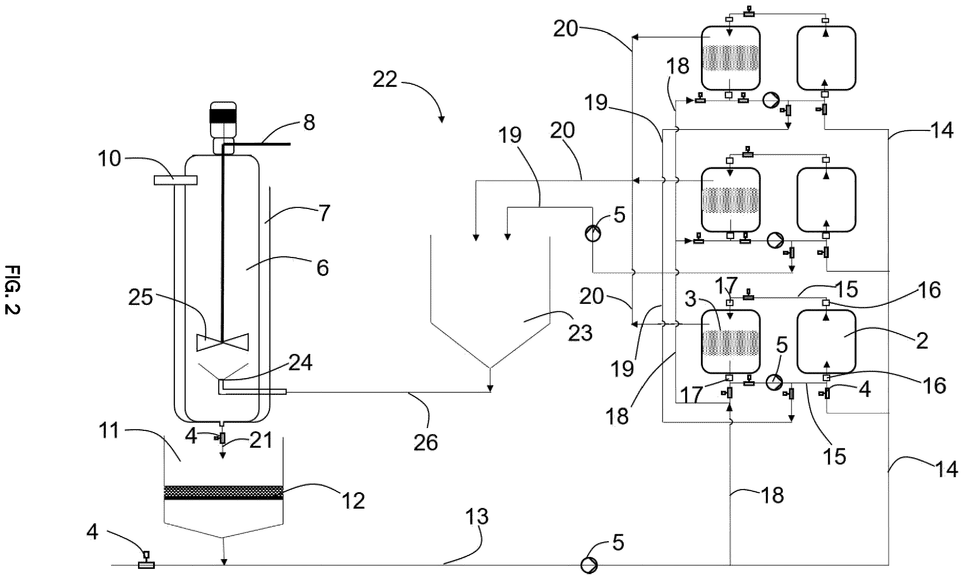

Figur 2 zeigt schematisch ein System für die Implementierung eines Kalk-Kohlendioxid-Kreislaufs bei der Eisen- und Stahlproduktion gemäß einer weiteren Ausführungsform. Gleiche bzw. ähnliche Elemente mit Bezug auf Figur 1 sind mit gleichen Bezugszeichen bezeichnet. Im Unterschied zu der in Figur 1 gezeigten Ausführungsform weist das in Figur 2 gezeigte System jeweils drei Lösebehälter 2 und drei Filterbehälter 3 auf. In den Lösebehältern 2 wird jeweils Schlacke bereitgestellt. Wie oben bereits beschrieben, kann die Schlacke gemäß einer bevorzugten Ausführungsform gemahlen sein mit einem durchschnittlichen Körnungsdurchmesser von 0,5 mm bis 1,5 mm, besonders bevorzugt 1 mm. Über die Zuleitungen 14 können die Lösebehälter 2 jeweils von unten her, eingangsseitig, mit Prozesswasser befüllt werden, analog zu der in Figur 1 beschriebenen Ausführungsform. Gemäß einer bevorzugten Ausführungsform kann auch hier ein Massenverhältnis von Prozesswasser zu Schlacke von 1:3 eingestellt werden.

Über die Zuleitungen 15 sind jeweils einer der Lösebehälter 2 und einer der Filterbehälter 3 in einem Fluidkreislauf miteinander verbunden, mit anderen Worten, das Prozesswasser wird im Kreislauf vom Ausgang des jeweiligen Lösebehälters 2 zum Eingang des jeweiligen Filterbehälters 3 und entsprechend vom Ausgang des jeweiligen Filterbehälters 3 wieder zum Eingang des jeweiligen Lösebehälters 2 mittels der Pumpen 5 bei entsprechend geöffneten Ventilen 4 geführt.

In der in Figur 2 gezeigten Ausführungsform sind jeweils am Eingang und am Ausgang eines jeden Lösebehälters 2 pH-Wert Messgeräte 16 angeordnet. Auf diese Weise kann eine pH-Wert Differenz zwischen Eingang und Ausgang des Lösebehälters 2 bestimmt werden. Ändert sich der pH-Wert bei Durchströmen des Lösebehälters 2 nicht mehr signifikant, d.h. bleibt die Differenz des pH-Wertes konstant in einem Bereich von ± 0,5, vorzugsweise in einem Bereich von + 0,2, kann angenommen werden, dass der Löseprozess vollständig ist, d.h. dass alle löslichen Calciumoxidanteile aus der Schlacke herausgelöst wurden. An dieser Stelle kann dann die Schlacke ausgetauscht werden und ein erneuter Löseprozess begonnen werden. Die restliche Schlacke ist nach dem Herauslösen des Calciumoxids pH neutral und kann beispielsweise als Zusatz für die Bauindustrie eingesetzt werden. Ebenso sind in der in Figur 2 gezeigten Ausführungsform jeweils am Eingang und am Ausgang eines jeden Filterbehälters 3 Drucksensoren 17 angeordnet. Mittels dieser Drucksensoren 17 kann vorteilhaft ein Differenzdruck in Bezug auf das jeweilige Filtermedium bestimmt werden und basierend auf einem festgelegten Schwellendruck das jeweilige Filtermedium in dem Filterbehälter 3 gespült werden, um das aufgefangene Calciumhydroxid aus dem Filtermedium herauszuwaschen. Analog zur Figur 1 ist auch bei der Ausführungsform in Figur 2 das Filtermedium erfindungsgemäß nicht eingeschränkt, es wird aber bevorzugt ein Sandfilter als Filtermedium verwendet.

Gespült werden kann das jeweilige Filtermedium durch die ausgangsseitige Wasserzufuhr zu dem jeweiligen Filterbehälter 3 über die Zuleitungen 18 analog zu der Ausführungsform in Figur 1.

Über die Zuleitungen 20 kann dann das aus den jeweiligen Filtermedien der Filterbehälter 3 gespülte Calciumhydroxid in einen Zwischenbehälter 23 überführt und dort gesammelt werden. Ebenso kann über die Zuleitungen 19 weiteres Prozesswasser in den Zwischenbehälter 23 geleitet werden.

Das Calciumhydroxid kann sich somit am Boden des Zwischenbehälters 23 absetzen und von dort aus über die Zuleitung 26 zusammen mit Prozesswasser über den Verteiler 24 in den beheizten Reaktionsbehälter 6 gefördert werden. Analog zur Ausführungsform in Figur 1 weist auch hier der Reaktionsbehälter 6 eine Mantelheizung 7 auf, welche vorzugsweise mit Produktionsabgas betrieben werden kann und mittels welcher gemäß einer bevorzugten Ausführungsform der Reaktionsbehälter 6 auf 60°C oder mehr aufgeheizt werden kann.

In der Ausführungsform in Figur 2 ist der Reaktionsbehälter 6 als Flotation ausgebildet. Die Ableitung 10 dient daher hier als Ableitung für den im Rahmen der Flotation gebildeten Schaum. Diese Schaumbildung kann vorteilhaft dazu genutzt werden, Calciumcarbonat und eventuell noch vorhandene Schmutzpartikel aus der Schlacke zu separieren, indem die Schmutzpartikel mit dem in der Flotation entstehenden Schaum über die Ableitung 10 abgetragen werden können.

Der Rührer 25 ist in der Ausführungsform in Figur 2 derart ausgebildet, dass er das über die Abgaszuleitung 8 eingeleitete gereinigte Produktionsabgas in Mikroblasen zerschlägt. Auf diese Weise kann eine möglichst große Grenzfläche geschaffen werden, an welcher das im Abgas vorhandene Kohlendioxid mit dem im Prozesswasser vorliegenden Calciumhydroxid zu Calciumcarbonat reagieren kann.

Gemäß einer bevorzugten Ausführungsform kann auch hier, analog zur Ausführungsform in Figur 1, ein Massenverhältnis von Calciumhydroxid zu Kohlendioxid von 1:0,6 eingestellt werden.

Durch in Bewegung halten der Reaktanden, Produkte und des Prozesswassers, bleibt das gebildete Calciumcarbonat im Prozesswasser verteilt bzw. suspendiert und setzt sich nach erfolgter Reaktion nicht am Boden ab. Ist die Reaktion zu Calciumcarbonat beendet, so kann die Mischung aus Prozesswasser und darin verteiltem Calciumcarbonat bei geöffnetem Ventil 4 über die Zuleitung 21 in den Tank 11 geleitet werden. Analog zur Ausführungsform in Figur 1, weist der Tank 11 ein Bett aus porösem Kalkgranulat auf, an welchem sich die Calciumcarbonatpartikel anlagern können, so dass Kalkstein gebildet wird. Das Kalkgranulatbett 12 kann dabei beispielsweise auf einem Siebboden gelagert sein. Der gebildete Kalkstein kann in den Eisen- und Stahlproduktionsprozess rückgeführt werden. Ein Anteil kann auch gebrochen und erneut als Kalkgranulat im Tank 11 eingesetzt werden und/oder als hochwertiges Endprodukt weiterverwendet werden. Das im Tank 11 aufgefangene Prozesswasser kann über die Zuleitung 13 ebenfalls wieder in den Prozess zurückgeführt werden.

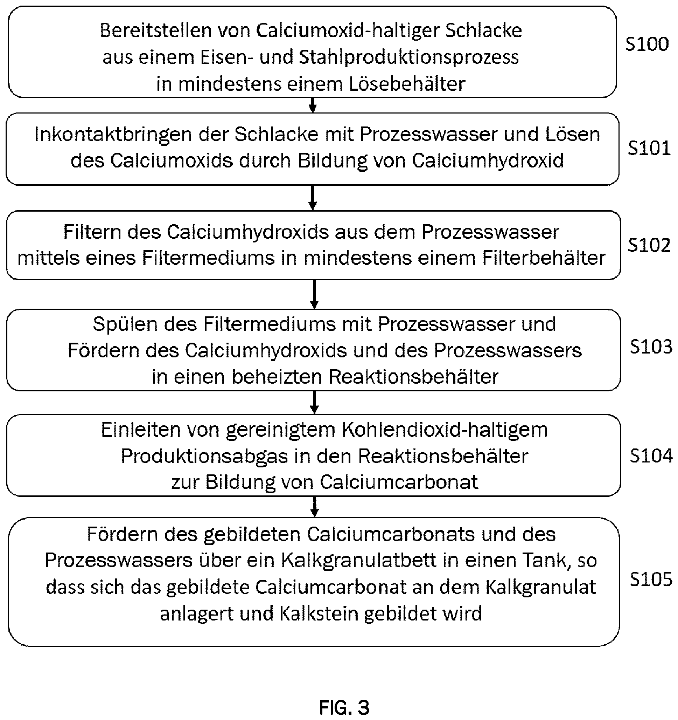

Figur 3 zeigt ein Flussdiagramm eines Verfahrens zur Implementierung eines Kalk-Kohlendioxid-Kreislaufs bei der Eisen- und Stahlproduktion gemäß einer Ausführungsform. Das Verfahren umfasst den Schritt S100 des Bereitstellens von Calciumoxid-haltiger Schlacke aus dem Produktionsprozess in mindestens einem Lösebehälter. Gemäß einer bevorzugten Ausführungsform kann die Schlacke gemahlen mit einem durchschnittlichen Körnungsdurchmesser von 0,5 mm bis 1,5 mm, besonders bevorzugt 1 mm, bereitgestellt werden.

Das Verfahren umfasst nachfolgend den Schritt S101 des Inkontaktbringens der Schlacke mit Prozesswasser und Lösen des Calciumoxids durch Bildung von Calciumhydroxid. Gemäß einer bevorzugten Ausführungsform kann dabei ein Massenverhältnis von Wasser zu Schlacke von 1:3 eingestellt werden. Gemäß einer weiteren bevorzugten Ausführungsform kann das Inkontaktbringen mit Prozesswasser erfolgen, bis ein pH-Wert des Prozesswassers in einem Bereich von 10 bis 12 liegt, bevorzugt jedoch in einem Bereich von 10 bis 11,5, besonders bevorzugt in einem Bereich von 10 bis 10,5.

Das Verfahren umfasst nachfolgend weiterhin die Schritte S102 des Filterns des Calciumhydroxids aus dem Prozesswasser mittels eines Filtermediums in mindestens einem Filterbehälter und S103 des Spülens des Filtermediums mit Prozesswasser und des Förderns des Calciumhydroxids und des Prozesswassers in einen beheizten Reaktionsbehälter. Gemäß einer bevorzugten Ausführungsform kann das Filtermedium mit Prozesswasser gespült werden, sobald ein gemessener Differenzdruck am Eingang und am Ausgang des mindestens einen Filterbehälters einen vorbestimmten Schwellendruck überschreitet. Des Weiteren kann gemäß einer bevorzugten Ausführungsform der Reaktionsbehälter auf 60°C oder mehr aufgeheizt werden. Gemäß einer überdies bevorzugten Ausführungsform kann der Reaktionsbehälter mit gereinigtem Produktionsabgas über eine Mantelheizung beheizt werden.

Das Verfahren umfasst nachfolgend weiterhin den Schritt S104 des Einleitens von gereinigtem Kohlendioxid-haltigem Produktionsabgas in den Reaktionsbehälter zur Bildung von Calciumcarbonat. Gemäß einer bevorzugten Ausführungsform kann in dem Reaktionsbehälter ein Massenverhältnis von Calciumhydroxid zu Kohlendioxid von 1:0,6 eingestellt werden.

Das Verfahren umfasst nachfolgend ebenfalls den Schritt S105 des Förderns des gebildeten Calciumcarbonats und des Prozesswassers über ein Kalkgranulatbett in einen Tank, so dass sich das gebildete Calciumcarbonat an dem Kalkgranulat anlagert und Kalkstein gebildet wird.

Gemäß einer bevorzugten Ausführungsform kann das Verfahren zusätzlich den Schritt des Einbringens des gebildeten Kalksteins in den Eisen- und Stahlproduktionsprozess umfassen.

Gemäß einer weiterhin bevorzugten Ausführungsform können die Schritte S100 bis S103 parallel in drei oder mehr Lösebehältern und drei oder mehr Filterbehältern durchgeführt werden, und wobei in Schritt S104 das Calciumhydroxid und das Prozesswasser nach dem Spülen der Filtermedien in einem Zwischenbehälter gesammelt werden kann, bevor es in den beheizten Reaktionsbehälter gefördert wird.

Die hierin beschriebenen Ausgestaltungen eines Verfahrens und die hierin beschriebenen Ausgestaltungen eines Systems zur Implementierung eines Kalk-Kohlendioxid-Kreislaufs bei der Eisen- und Stahlproduktion erlauben es, unter Verwendung von Schlacke das im Produktionsprozess gebildete Kohlendioxid aus dem Produktionsabgas durch Bildung von Calciumcarbonat zu entfernen und den so gebildeten Kalkstein wieder in den Eisen- und Stahlproduktionsprozess rückzuführen. Auf diese Weise kann vorteilhaft die aus der Stahlproduktion entstehende Umweltbelastung durch Kohlendioxid reduziert werden. Dies ist besonders im Hinblick auf die Erfüllung von Klimazielen, wie beispielsweise im Rahmen des Klimaschutzplans 2050 der deutschen Bundesregierung von großer Bedeutung. Überdies können im Falle einer zukünftigen Besteuerung von Kohlendioxidemissionen zusätzlich auch Mehrkosten bei der Eisen- und Stahlproduktion eingespart werden. Gleichzeitig ermöglichen das hierin beschriebene Verfahren und das hierin beschriebene System zur Implementierung eines Kalk-Kohlendioxid-Kreislaufs bei der Eisen- und Stahlproduktion die im Produktionsprozess anfallende Schlacke als einen hochwertigen Rohstoff für die Kalksteinproduktion zu nutzen. Insbesondere durch den vorgesehenen Filtrierschritt kann ein qualitativ hochwertiges Endprodukt hergestellt werden, da Verunreinigungen durch weitere Bestandteile der Schlacke vermieden werden können.

### BEZUGSZEICHENLISTE

- 1: System für die Implementierung eines Kalk-Kohlendioxid-Kreislaufs bei der Eisen- und Stahlproduktion
- 2: Lösebehälter
- 3: Filterbehälter
- 4: Ventil
- 5: Pumpe
- 6: Reaktionsbehälter/Flotation
- 7: Mantelheizung
- 8: Abgaszuleitung
- 9: Rührwerk
- 10: Ableitung
- 11: Tank
- 12: Kalkgranulatbett
- 13: Zuleitung
- 14: Zuleitung
- 15: Zuleitung
- 16: pH-Wert Messgerät
- 17: Drucksensor
- 18: Zuleitung
- 19: Zuleitung
- 20: Zuleitung
- 21: Zuleitung
- 22: System für die Implementierung eines Kalk-Kohlendioxid-Kreislaufs bei der Eisen- und Stahlproduktion
- 23: Zwischenbehälter
- 24: Verteiler
- 25: Rührwerk der Flotation
- 26: Zuleitung

## Patentansprüche

1. Verfahren zur Implementierung eines Kalk-Kohlendioxid-Kreislaufs bei der Eisen- und Stahlproduktion umfassend die Schritte:
(a) Bereitstellen (S101) von Calciumoxid-haltiger Schlacke aus dem Eisen- und Stahlproduktionsprozess in mindestens einem Lösebehälter (2);
(b) Inkontaktbringen (S102) der Schlacke mit Prozesswasser und Lösen des Calciumoxids durch Bildung von Calciumhydroxid;
(c) Fördern (S103) des Calciumhydroxids und des Prozesswassers in ein Reaktionsbecken (6);
(d) Einleiten (S104) unter Rühren (9) von gereinigtem Kohlendioxid-haltigem Produktionsabgas in das Reaktionsbecken (6) zur Bildung von Calciumcarbonat; und
(e) Fördern (S105) des gebildeten Calciumcarbonats und des Prozesswassers in mindestens ein Absetzbecken, so dass sich das gebildete Calciumcarbonat in dem mindestens einen Absetzbecken absetzt,
**dadurch gekennzeichnet, dass** das Absetzbecken ein Kalkgranulatbett (12) aufweist, so dass sich das gebildete Calciumcarbonat an dem Kalkgranulat anlagert und Kalkstein gebildet wird.

2. Verfahren nach Anspruch 1, wobei das Verfahren zwischen Schritt (b) und Schritt (c) zusätzlich den Schritt (bi) umfasst: Filtern (S102) des Calciumhydroxids aus dem Prozesswasser mittels eines Filtermediums in mindestens einem Filterbehälter (3) und Spülen (S103) des Filtermediums mit Prozesswasser.

3. Verfahren nach Anspruch 2, wobei das Filtermedium mit Prozesswasser gespült wird, sobald ein gemessener Differenzdruck am Eingang und am Ausgang des mindestens einen Filterbehälters (3) einen vorbestimmten Schwellendruck überschreitet.

4. Verfahren nach Anspruch 2 oder 3, wobei die Schritte (a) bis (bi) parallel in drei oder mehr Lösebehältern (2) und drei oder mehr Filterbehältern (3) durchgeführt werden, und wobei das Calciumhydroxid und das Prozesswasser nach dem Spülen der Filtermedien in einem Zwischenbehälter (23) gesammelt wird, bevor es in das Reaktionsbecken (6) gefördert wird.

5. Verfahren nach zumindest einem der Ansprüche 1 bis 4, wobei das Reaktionsbecken (6) auf 60°C oder mehr aufgeheizt wird.

6. Verfahren nach Anspruch 5, wobei das Reaktionsbecken (6) mit gereinigtem Produktionsabgas über eine Mantelheizung (7) beheizt wird.

7. Verfahren nach zumindest einem der Ansprüche 1 bis 6, wobei in Schritt (b) das Inkontaktbringen mit Prozesswasser erfolgt, bis ein pH-Wert des Prozesswassers in einem Bereich von 10 bis 12 liegt.

8. Verfahren nach zumindest einem der Ansprüche 1 bis 7, wobei in Schritt (d) in dem Reaktionsbecken (6) ein Massenverhältnis von Calciumhydroxid zu Kohlendioxid von 1:0,6 eingestellt wird.

9. Verfahren nach zumindest einem der Ansprüche 1 bis 8, wobei in Schritt (b) ein Massenverhältnis von Prozesswasser zu Schlacke von 1:3 eingestellt wird.

10. Verfahren nach zumindest einem der Ansprüche 1 bis 9, wobei in Schritt (a) die Schlacke gemahlen mit einem durchschnittlichen Körnungsdurchmesser von 0,5 mm bis 1,5 mm bereitgestellt wird.

11. Verfahren nach zumindest einem der Ansprüche 1 bis 10, wobei das Verfahren zusätzlich den Schritt umfasst (f) Einbringen des gebildeten Kalksteins in den Eisen- und Stahlproduktionsprozess.

12. System (1, 22) für die Implementierung eines Kalk-Kohlendioxid-Kreislaufs bei der Eisen- und Stahlproduktion, wobei das System (1, 22) umfasst:
(a) mindestens einen Lösebehälter (2);
(b) ein Reaktionsbecken (6) mit einem Rührer (9), welches dem mindestens einen Lösebehälter (2) nachgeschaltet ist; und
(c) mindestens ein Absetzbecken, welches dem Reaktionsbecken (6) nachgeschaltet ist, **dadurch gekennzeichnet, dass** das Absetzbecken ein Kalkgranulatbett (12) aufweist.

13. System (1, 22) nach Anspruch 12, wobei das System (1, 22) zusätzlich mindestens einen Filterbehälter (3) mit einem Filtermedium umfasst, wobei der mindestens eine Filterbehälter (3) mit dem mindestens einen Lösebehälter (2) durch einen Fluidkreislauf (15) in Verbindung steht und das Reaktionsbecken (6) dem mindestens einen Filterbehälter (3) nachgeschaltet ist.

14. System (1, 22) nach Anspruch 13, wobei das System (1, 22) drei oder mehr jeweils durch einen Fluidkreislauf (15) miteinander in Verbindung stehende Lösebehälter (2) und Filterbehälter (3) umfasst, und wobei ein Zwischenbehälter (23) den drei oder mehr Filterbehältern (3) nachgeschaltet und dem Reaktionsbecken (6) vorgeschaltet ist.

15. System (1, 22) nach Anspruch 13 oder 14, wobei in den Fluidkreislauf (15) zwischen dem mindestens einen Filterbehälter (3) und dem mindestens einen Lösebehälter (2) mindestens ein pH-Wert Messgerät (16) und mindestens ein Drucksensor (17) geschaltet sind.

16. System (1, 22) nach zumindest einem der Ansprüche 12 bis 15, wobei das Reaktionsbecken (6) als Flotation ausgebildet ist.

17. System (1, 22) nach zumindest einem der Ansprüche 13 bis 16, wobei der mindestens eine Filterbehälter (3) einen Sandfilter als Filtermedium enthält.

## Claims

1. Method for implementing a limestone-carbon dioxide cycle in iron and steel production comprising the steps of:
(a) providing (S101) calcium oxide-containing slag from the iron and steel production process in at least one dissolving tank (2);
(b) causing (S102) the slag to contact process water and dissolve the calcium oxide by forming calcium hydroxide;
(c) conveying (S103) the calcium hydroxide and process water to a reaction tank (6);
(d) introducing (S104), with agitation (9), purified carbon dioxide-containing production offgas into the reaction tank (6) to form calcium carbonate; and
(e) conveying (S105) the formed calcium carbonate and process water to at least one settling basin so that the formed calcium carbonate settles in the at least one settling basin,
**characterized in that**:
the settling basin comprises a granular lime bed (12) so that the formed calcium carbonate attaches to the granular lime and limestone is formed.

2. Method according to claim 1, wherein
between step (b) and step (c) the method additionally comprises the step (bi): filtering (S102) the calcium hydroxide from the process water by means of a filter medium in at least one filter container (3) and rinsing (S103) the filter medium with process water.

3. Method according to claim 2, wherein
the filter medium is flushed with process water as soon as a measured differential pressure at an inlet and outlet of the at least one filter container (3) exceeds a predetermined threshold pressure.

4. Method according to claim 2 or 3, wherein
steps (a) to (bi) are carried out in parallel in three or more dissolving tanks (2) and three or more filter container (3), and wherein
the calcium hydroxide and the process water are collected in an intermediate vessel (23) after rinsing of the filter media before being conveyed to the reaction tank (6).

5. Method according to at least one of claims 1 to 4, wherein
the reaction tank (6) is heated to 60°C or more.

6. Method according to claim 5, wherein
the reaction tank (6) is heated with purified production offgas via a jacket heater (7).

7. Method according to at least one of claims 1 to 6, wherein
step (b) involves contacting with process water until a pH of the process water is in a range of 10 to 12.

8. Method according to at least one of claims 1 to 7, wherein
in step (d) a mass ratio of calcium hydroxide to carbon dioxide of 1:0.6 is established in the reaction tank (6).

9. Method according to at least one of claims 1 to 8, wherein
in step (b) a mass ratio of process water to slag of 1:3 is established.

10. Method according to at least one of claims 1 to 9, wherein
in step (a) the slag is provided in a ground form with an average grain diameter of 0.5 mm to 1.5 mm.

11. Method according to at least one of claims 1 to 10, wherein
the process additionally comprises the step of (f): introducing the formed limestone into the iron and steel production process.

12. System (1, 22) for implementing a limestone-carbon dioxide cycle in iron and steel production, the system (1, 22) comprising:
(a) at least one dissolving tank (2);
(b) a reaction tank (6) with an agitator (9) arranged downstream of the at least one dissolving tank (2); and
(c) at least one settling basin downstream of the reaction tank (6),
**characterized in that**:
the settling basin comprises a granular lime bed (12).

13. System (1, 22) according to claim 12, wherein
the system (1, 22) further comprises at least one filter container (3) with a filter medium, wherein
the at least one filter container (3) is coupled to the at least one dissolving tank (2) by a fluid circuit (15) and the reaction tank (6) is arranged downstream of the at least one filter container (3).

14. System (1, 22) according to claim 13, wherein
the system (1, 22) comprises three or more dissolving tanks (2) and filter containers (3) each communicating with each other through a fluid circuit (15), and wherein
an intermediate vessel (23) is arranged downstream of the three or more filter containers (3) and upstream of the reaction tank (6).

15. System (1, 22) according to claim 13 or 14, wherein
at least one pH measuring device (16) and at least one pressure sensor (17) are arranged in the fluid circuit (15) between the at least one filter container (3) and the at least one dissolving tank (2).

16. System (1, 22) according to at least one of claims 12 to 15, wherein
the reaction tank (6) is configured as a flotation.

17. System (1, 22) according to at least one of claims 13 to 16, wherein
the at least one filter container (3) contains a sand filter as filter medium.

## Revendications

1. Procédé de mise en oeuvre d'un cycle chaux-dioxyde de carbone dans la production de fer et d'acier, comprenant les étapes consistant à :
(a) fournir (S101) des scories, contenant de l'oxyde de calcium provenant du processus de production de fer et d'acier, dans au moins un récipient de dissolution (2) ;
(b) mettre en contact (S102) les scories avec de l'eau de traitement et faire dissoudre l'oxyde de calcium par formation d'hydroxyde de calcium ;
(c) transporter (S103) l'hydroxyde de calcium et l'eau de traitement vers une cuve de réaction (6) ;
(d) introduire (S104), sous agitation (9), des effluents gazeux de production purifiés, contenant du dioxyde de carbone, dans la cuve de réaction (6) pour former du carbonate de calcium ; et
(e) transporter (S105) le carbonate de calcium formé et l'eau de traitement vers au moins une cuve de décantation, de sorte que le carbonate de calcium formé se dépose dans ladite au moins une cuve de décantation,
**caractérisé en ce que**
la cuve de décantation comprend un lit de granulés de chaux (12), de sorte que le carbonate de calcium formé se fixe sur les granulés de chaux et que du calcaire soit formé.

2. Procédé selon la revendication 1,
dans lequel, entre l'étape (b) et l'étape (c), le procédé comprend en supplément l'étape (bi) consistant à filtrer (S102) l'hydroxyde de calcium à partir de l'eau de traitement au moyen d'un milieu filtrant dans au moins un récipient de filtration (3) et à rincer (S103) le milieu filtrant avec de l'eau de traitement.

3. Procédé selon la revendication 2,
dans lequel le milieu filtrant est rincé avec de l'eau de traitement dès qu'une pression différentielle mesurée à l'entrée et à la sortie dudit au moins un récipient de filtration (3) dépasse une pression seuil prédéterminée.

4. Procédé selon la revendication 2 ou 3,
dans lequel les étapes (a) à (bi) sont réalisées en parallèle dans trois ou plusieurs récipients de dissolution (2) et dans trois ou plusieurs récipients de filtration (3), et l'hydroxyde de calcium et l'eau de traitement sont collectés dans un récipient intermédiaire (23) après le rinçage des milieux filtrants, avant d'être transportés vers la cuve de réaction (6).

5. Procédé selon l'une au moins des revendications 1 à 4,
dans lequel la cuve de réaction (6) est chauffée à 60°C ou plus.

6. Procédé selon la revendication 5,
dans lequel la cuve de réaction (6) est chauffée par des effluents gazeux de production purifiés via un chauffage d'enveloppe (7).

7. Procédé selon l'une au moins des revendications 1 à 6,
dans lequel, à l'étape (b), la mise en contact avec l'eau de traitement est effectuée jusqu'à ce qu'un pH de l'eau de traitement soit compris dans une plage de 10 à 12.

8. Procédé selon l'une au moins des revendications 1 à 7,
dans lequel, à l'étape (d), on ajuste dans la cuve de réaction (6) un rapport massique de l'hydroxyde de calcium sur le dioxyde de carbone de 1:0,6.

9. Procédé selon l'une au moins des revendications 1 à 8,
dans lequel, à l'étape (b), on ajuste un rapport massique de l'eau de traitement sur les scories de 1:3.

10. Procédé selon l'une au moins des revendications 1 à 9,
dans lequel, à l'étape (a), les scories sont fournies broyées avec un diamètre moyen de grain de 0,5 mm à 1,5 mm.

11. Procédé selon l'une au moins des revendications 1 à 10,
dans lequel le procédé comprend en outre l'étape (f) consistant à introduire le calcaire formé dans le processus de production de fer et d'acier.

12. Système (1, 22) pour la mise en oeuvre d'un cycle chaux-dioxyde de carbone dans la production de fer et d'acier, ledit système (1, 22) comprenant :
(a) au moins un récipient de dissolution (2) ;
(b) une cuve de réaction (6) comprenant un agitateur (9), placée en aval dudit au moins un récipient de dissolution (2) ; et
(c) au moins une cuve de décantation, placée en aval de la cuve de réaction (6),
**caractérisé en ce que**
la cuve de décantation comprend un lit de granulés de chaux (12).

13. Système (1, 22) selon la revendication 12,
dans lequel le système (1, 22) comprend en supplément au moins un récipient de filtration (3) ayant un milieu filtrant, ledit au moins un récipient de filtration (3) étant en communication avec ledit au moins un récipient de dissolution (2) par l'intermédiaire d'un circuit de fluide (15), et la cuve de réaction (6) étant placée en aval dudit au moins un récipient de filtration (3).

14. Système (1, 22) selon la revendication 13,
dans lequel le système (1, 22) comprend trois ou plusieurs récipients de dissolution (2) et récipients de filtration (3) communiquant entre eux par l'intermédiaire d'un circuit de fluide respectif (15), et un récipient intermédiaire (23) est placé en aval desdits trois ou plusieurs récipients de filtration (3) et en amont de la cuve de réaction (6).

15. Système (1, 22) selon la revendication 13 ou 14,
dans lequel au moins un appareil de mesure du pH (16) et au moins un capteur de pression (17) sont placés dans le circuit de fluide (15) entre ledit au moins un récipient de filtration (3) et ledit au moins un récipient de dissolution (2).

16. Système (1, 22) selon l'une au moins des revendications 12 à 15,
dans lequel la cuve de réaction (6) est conçue comme une flottation.

17. Système (1, 22) selon l'une au moins des revendications 13 à 16,
dans lequel ledit au moins un récipient de filtration (3) contient un filtre à sable comme milieu filtrant.
